# EUROPEAN PATENT SPECIFICATION

(11) **EP 0 608 943 B1**
(45) Date of publication and mention of the grant of the patent: **24.03.1999**
(21) Application number: 94200147.0
(22) Date of filing: 21.01.1994
(51) Int. Cl.: A01K 1/00, A01K 1/12, A01K 3/00

(54) **A construction for automatically milking animals**
Konstruktion zum automatischen Melken von Tieren
Une construction de traite automatique pour animaux

(30) Priority: 27.01.1993 NL 9300153
(43) Date of publication of application: 03.08.1994
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 091 892
- EP-A- 0 389 013
- DE-A- 2 232 480
- DE-A- 3 704 495

## Description

The present invention relates to a construction for automatically milking animals, such as cows, comprising an enclosed area with a space and a number of pastures in which the animals can freely move about, said pastures being arranged to accommodate separate groups of animals. Such a construction is known from DE-OS-37 04 495. In this construction it is possible to milk two separated groups of animals, without that these groups are mixed with each other. The disadvantage of this construction is that it is not possible to milk more than two separated groups of animals.

The invention has for its object to provide a construction and/or a pasture lay-out, in which more than two separated groups of animals can be milked.

According to the invention, the construction further comprising a milking robot area with a milking robot and at least one path arranged between the milking robot area and said pastures and in that the pastures and the milking robot area are via doors, more specifically computer-controlled doors into connection with said path and whereby the doors are opened in such a way, that the animals can pass from a respective pasture via said path to the milking robot area for the purpose of being milked and from the milking robot area via said path to the respective pasture.

By constructing such a path and by selective access thereto, it can be achieved that more than two separated groups of animals can reach the milking robot in an efficient manner from the pasture sections.

Furthermore measures enable an advantageous time schedule for milking the animals. The invention is based in this respect on the recognition of the fact that, when the animals pass through the construction in separate groups and are milked a number of times, for example three times every 24 hours, an adequate period of time will always lapse before a milked animal will be milked again. It is basically a disadvantage when an animal would be milked at too short an interval.

For a better understanding of the invention and to show how the same may be carried into effect, reference will now be made, by way of example, to the accompanying drawings, wherein:
Figures 1 to 8 inclusive show the lay-out of a shed, in which the individual Figures show how the animals staying in this shed pass in consecutive time intervals through the shed with incorporated milking robot; and
Figure 9 shows the division of a pasture into pasture sections, wherein furthermore the shed area intended for the animals is shown and the path surrounding the pasture sections for proceeding from the relevant pasture sections to the shed.

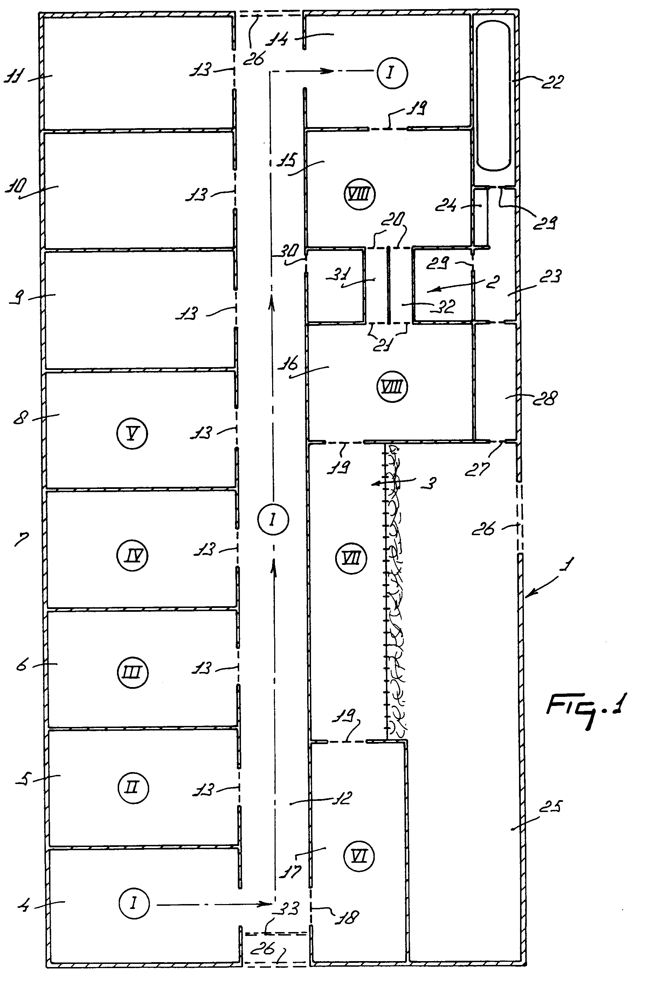

The construction for automatically milking animals, such as cows, is constituted in the Figures 1 to 8 inclusive by a shed 1 incorporating a robot area 2, a feed station 3 as well as a plurality of areas for groups of animals with a plurality of meeting points. The embodiment shown is based on the assumption that there are eight groups of animals, for which the areas 4 to 11 inclusive are intended. In this embodiment these areas 4 to 11 inclusive are arranged in a side-by-side relationship in the longitudinal direction of the shed. A path or passage 12 passes along the area 4 to 11 inclusive approximately in the centre of the shed. Access to the areas 4 to 11 inclusive from this passage 12 and vice versa is provided by doors, more specifically computer-controlled doors 13. At the other side of the passage 12, in the Figure from right to left, a meeting point 14, a meeting point 15, the robot area 2, a meeting point 16, the feed station 3 and a meeting point 17 are located. By positioning the feed station in the direction of walk relatively close behind the robot area, the animals will be stimulated by their appetite, particularly in winter, to go to the robot area to be milked there. Doors, more specifically computer-controlled doors 18 are located between the passage 12 and the meeting points 14 and 17, whereas doors, more specifically computer-controlled doors 19, are located between the meeting points 14 and 15 and between the meeting point 16 and the feed station 3 and between the feed station 3 and the meeting point 17. Located between the meeting point 15 and the robot area 2, and between the robot area 2 and the meeting point 16 there are doors, more specifically computer-controlled doors 20 and 21. In the space between the meeting point 14 and a portion of the meeting point 15 on the one hand, and the outer wall of the shed 1 on the other hand there is an area 22 for the milk tank and for a portion of the associated milking aquipment, whereas in addition a computer area 23 is located between the robot area 2 and a portion of the meeting point 15 on the one hand, and the outer wall of the shed 1 on the other hand. Besides the milking robot, a portion of the milking equipment is also housed in the robot area 2. The milking process computer 24 is located in the area 23. Between the feed station 3 and the meeting point 17 on the one hand and the outer wall of the shed 1 on the other hand there is an area 25 for the storage of roughage and concentrates. Arranged along the feed station 3, this area 25 accommodates a gutter and/or feed troughs for supplying roughage and/or concentrates to the animals present in the feed station 3. Access to the passage 12 and the area 25 is obtained via doors 26. The computer area 23 is accessible from the area 25 via doors 27 and the passage 28. The robot area 2 and the area 22 for the milk tank and a portion of the associated milking equipment can be reached from the computer area 23, via doors 29. The robot area 2 can also be reached from the passage 12, more in particular via the door 30. The robot area 2 is only provided with two compartments 31 and 32, whilst only one milking robot is present, which is alternately pivatable from one to the other compartment, so that animals present in both compartments can alternately be milked therein. These compartments further contain all the equipment required therein for automatically and efficiently milking the animals. In addition to a milking robot, these compartments will also accommodate the means required for cleaning the teats of the animals to be milked as well an automatic feeding system; the feed troughs forming part thereof are attached to the doors 21 and are only shown very schematically. In order to drive the animals from the individual areas to the meeting point 14, driving means 33 are present in the passage 12. All possible known driving means may be used for these driving means, such as movable fences, partitions, wires or live wires, etc. The shed organization described in the foregoing is based on a distribution of the animals to be milked over eight groups of animals, each group consisting of ten animals. It is assumed for these animals that they are to be milked three times every 24 hours. The groups of animals which have their resting area in the areas 4 to 11 inclusive, will be denoted hereinafter as group I, group II and group III, respectively, etc. up to and inclusive of group VIII. In the drawings the group numbers are shown within a circle.

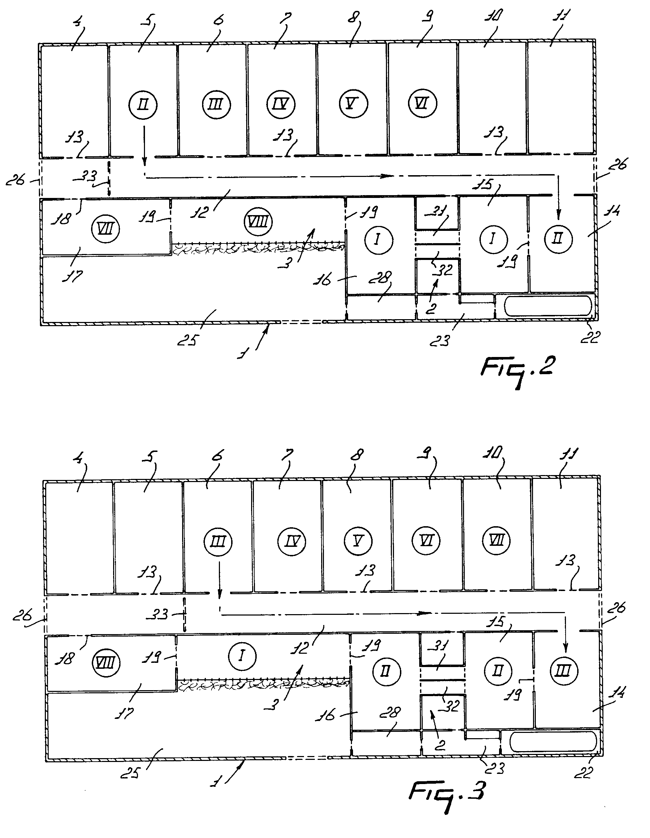

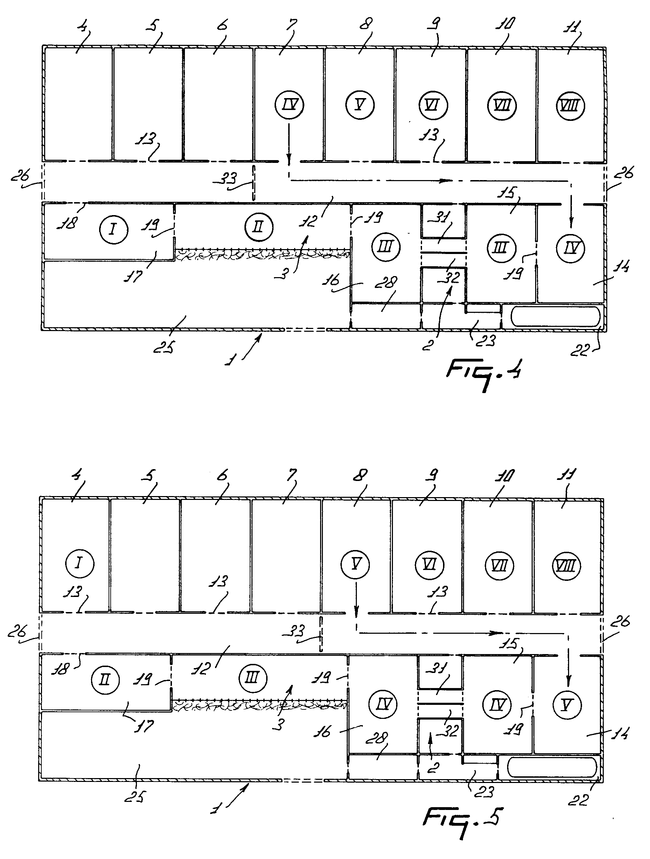

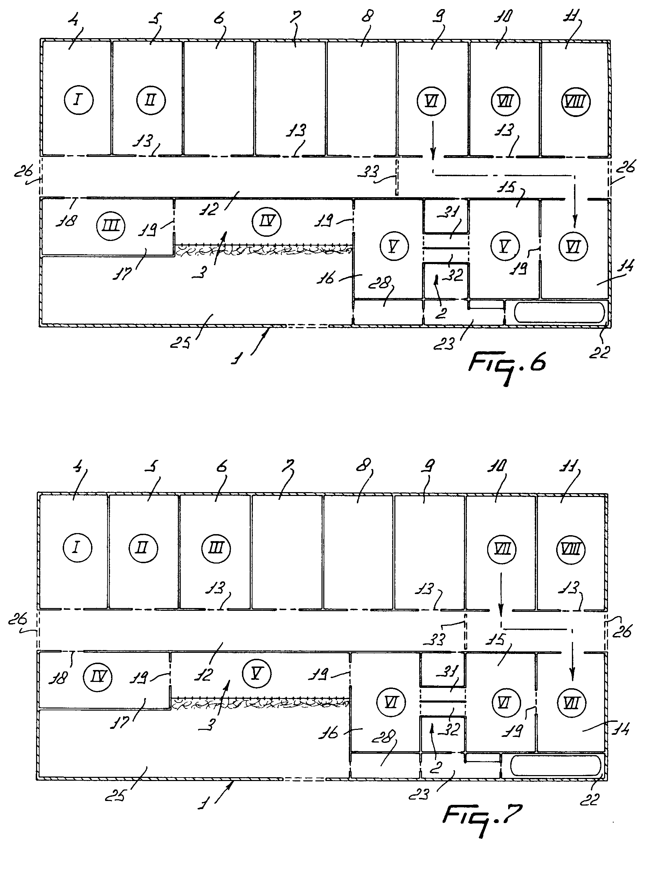

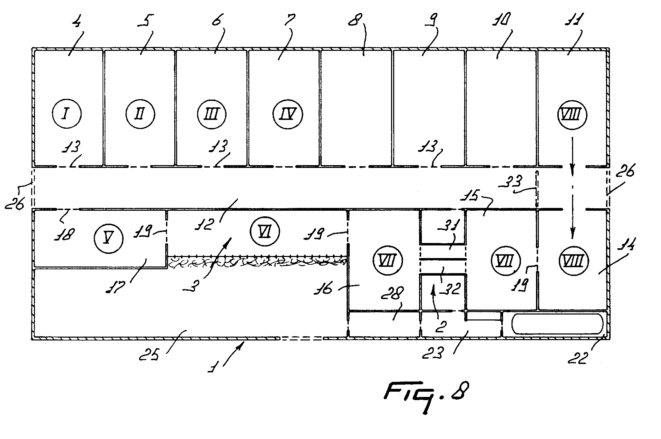

For all the animals together eight hours are available for each milking cycle. By distributing the animals over eight groups, it holds that each group of animals must be milked in one hour. Since there are ten animals in each group, this means that milking an individual animal may occupy six minutes. The time schedule for the passage of the groups of animals through the shed is such that always one hour is allotted for milking each group of animals, one hour for feeding each group of animals, whilst six hours are allotted to each group of animals per eight-hours' cycle for resting and for passing from the relevant resting area to the robot area and from the feed station back to the relevant resting area. To realize such a shed organization, a tight time schedule must also be maintained within the one-hour-cycle. In Figure 1 the initial situation of such a one-hour-cycle is shown. This cycle starts, for example, at 6 o'clock in the morning. From 6 to 6.10 a.m. the animals of group I present in area 4 are herded to the meeting point 14. At 6.10 a.m. all the animals of this group can be present at the meeting point 14 and the door 18 of this meeting point is closed. At the same time the door 13 of the area 4 is closed. At 6.11 a.m. the door 18 of the meeting point 17 and the door 13 of the area 9 are opened and the animals of group VI can go from the meeting point 17 to the area 9. At 6.21 a.m. the doors of the meeting point 17 and of the area 9 are closed. At that moment the last animals of group VIII which previous thereto were still present in the meeting point 15, should be in the robot area 2. In the period from 6.22 a.m. to 6.27 a.m. the one but last animal of group VIII must be milked and the animals of group I can go from the meeting point 14 to the meeting point 15. At 6.27 a.m. all the animals of group I must be present in the meeting point 15 and the doors 19 between the meeting points 14 and 15 are closed, whilst at that moment also the last but one animal of group VIII has been milked and must subsequently leave the robot area 2 and go to the meeting point 16. In the period from 6.28 a.m. to 6.33 a.m. the animals of group VII present in the feed station 3 must go to the meeting point 17, the last animal of group VIII is milked and the first animal of group I can enter the robot area to be milked there. At 6.33 a.m. all the animals of group VII will be present in the meeting point 17 and all the animals of group VIII are present in the meeting point 16. In the period from 6.34 a.m. to 6.39 a.m. the animals of group VIII can go from the meeting point 16 to the feed station 3, whilst a second animal of group I can enter the robot area 2. At 6.39 a.m. all the animals of group VIII have arrived in the feed station 3 and two animals of group I are present in the robot area 2, whilst the remaining animals of group I are still present in the meeting point 15. After the period from 6.40 a.m. to 7.00 a.m., i.e. at the end of the one-hour-cycle, the situation is again as it was at the beginning of the one-hour-cycle, the difference being that now group VII is present in the meeting point 17, group VIII in the feed station 3, whilst a portion of the animals of group I is present in the meeting point 15, a portion in the meeting point 16 and two animals of this group in the robot area 2. This situation is illustrated in Figure 2. At 7.00 a.m. the driving means 33 are now moved to the position shown in Figure 2, and the animals of group II are herded from the area 5 to the meeting point 14. As soon as the animals of group II have arrived in the meeting point 14, the driving means are made inoperative, they are, for example, hinged upwardly. The second one-hour-cycle which started at 7.00 a.m. now proceeds in the same manner as the first one-hour-cycle and ends as soon as all the animals of group VIII are present in the meeting point 17, all the animals of group I are present in the feed station 3, whilst the animals of group II are still partly collected in the meeting point 15, partly in the meeting point 16 and two of these animals are in the robot area 2. This situation is shown in Figure 3. At the end of this second one-hour-cycle, that is to say at 8.00 a.m., the drive means 33 are adjusted to the position shown in Figure 3 and group III can go from the section 6 to the meeting point 14. At the end of this third one-hour-cycle, that is to say at 9.00 a.m., all the animals of group I are present in the meeting point 17, all the animals of group II in the feed station 3 and the animals of group III are partly present in the meeting point 15, partly in the meeting point 16 and again two animals of this group are in the robot area 2. This situation is shown in Figure 4. The drive means 33 are moved further, so that the animals of group IV can go from the area 7 to the meeting point 14. The consecutive cycles are repeated, so that at 10.00 a.m. the animals of group V can proceed from the area 8 to the meeting point 14 (see Figure 5), at 11.00 a.m. the animals of group VI from the area 9 to the meeting point 14 (see Figure 6), at 12.00 a.m. the animals of group VII from the section 10 to the meeting point 14 (see Figure 7) and at 13.00 p.m. the animals of group VIII can proceed from the area 11 to the meeting point 14 (see Figure 8). At 14.00 p.m. an eight-hours-cycle has ended and all the animals have been milked once and a next eight-hours-cycle can start and that more particularly in the situation as shown in Figure 1. For each cycle of eight hours each group of animals has consequently one hour available for going from one of the areas 4 to 11 inclusive to the meeting point 14, one hour for being milked, thereafter one hour for feeding, one hour for returning from the meeting point 17 to the relevant areas and four hours for staying there.

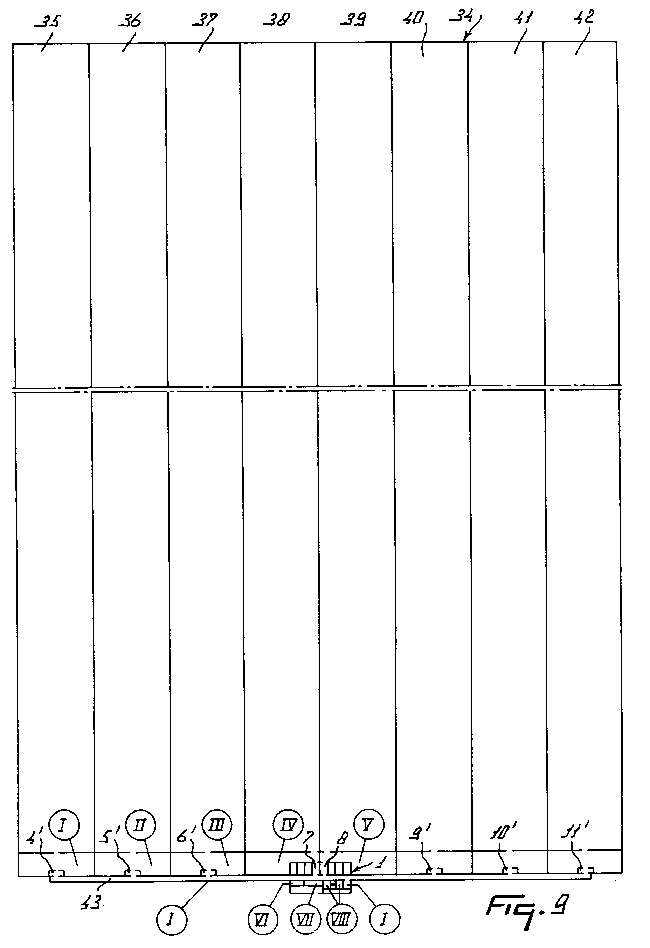

Figure 9 shows a pasture 34, which is divided into eight pasture sections 35 to 42 inclusive. Each of these pasture sections has a size of approximately five hectares. A path 43 extends along the short side of the pasture sections. The shed shown in Figures 1 to 8 inclusive is positioned such in Figure 9 that the path 43 is in the extension of the passage 12 of the shed. In this situation, which occurs in summer, the areas 4, 5 and 6 and the areas 9, 10 and 11 in the shed are closed and as a substitution thereof areas 4', 5', 6' and 9', 10' and 11' are created, which last-mentioned areas are located at the end of the short side of the pasture sections, whereas the doors of these last-mentioned areas again give access to the path 43. At the rear side the areas 4', 5', 6' and 9', 10' and 11' have free access to a seperate and, if necessary, closable portion of the relevant pasture sections. The areas 7 and 8 of the shed 1 remain in normal use, on the understanding that these sections then also give free access at the rear side to a portion of the relevant pasture sections 38 and 39. In this summer period the doors 26, which give access to the passage 12 of the shed 1, will be open, so that in the consecutive one-hour-cycles and always in the same manner and in accordance with the same time schedule as described hereinbefore, groups of animals can pass from a relevant pasture section over the path 43 to in the first instance the meeting point 14 of the shed. The animals can always return from the milking robot area to the pasture section intended for them.

## Claims

1. A construction for automatically milking animals, such as cows, comprising an enclosed area with a space (1) and a number of pastures (35 - 42) in which the animals can freely move about, said pastures (35 - 42) being arranged to accommodate separate groups of animals, characterized in that the construction further comprising a milking robot area (2) with a milking robot and at least one path (12, 43) arranged between the milking robot area (2) and said pastures (35 - 42) and in that the pastures (35 - 42) and the milking robot area are via doors, more specifically computer-controlled doors (13, 18 - 21) into connection with said path and whereby the doors are opened in such a way, that the animals can pass from a respective pasture via said path (12, 43) to the milking robot area (2) for the purpose of being milked and from the milking robot area (2) via said path (12, 43) to the respective pasture.

2. A construction as claimed in claim 1, characterized in that the path (43) to the milking robot area (2) extends along the end of a number of pasture sections (35 - 42).

3. A construction as claimed in claim 2, characterized in that the path (43) extends transversely to the pasture sections.

4. A construction as claimed in any one of the preceding claims, characterized in that the space (1) is located approximately halfway the path (43).

5. A construction as claimed in any one of the preceding claims, characterized in that the path (12) in the space (1) is in the extension of the path (43) to the pasture sections (35 - 42).

6. A construction as claimed in any one of the preceding claims, characterized in that there are eight pasture sections (35 - 42), each pasture section being intended for a group of ten animals.

7. A construction as claimed in any one of the preceding claims, characterized in that a pasture section (35 - 42) has a size of approximately five hectares.

8. A construction as claimed in any one of the preceding claims, characterized in that the space (1) is a loose housing in which the animals can freely move about.

9. A construction as claimed in any one of the preceding claims, characterized in that each time, after they have passed through the milking robot area (2) and a feed station (3), the animals have a period of rest of approximately six hours.

10. A construction as claimed in any one of the preceding claims, characterized in that the animals have a feeding time of approximately one hour.

11. A construction as claimed in any one of the preceding claims, characterized in that the milking time of an animal has a duration of approximately six minutes.

12. A construction as claimed in any one of the preceding claims, characterized in that the space (1) provides room for approximately eighty animals.

13. A construction as claimed in any one of the preceding claims, characterized in that the animals are milked three times a day.

14. A construction as claimed in any one of the preceding claims, characterized in that there are two meeting points (14, 15) in front of the milking robot.

15. A construction as claimed in any one of the preceding claims, characterized in that the milking robot area (2) comprises two compartments (31, 32) having one milking robot, an animal always being present in one of the compartments (31, 32).

16. A construction as claimed in claim 15, characterized in that the milking robot which is intended for both compartments (31, 32), is equipped with teat cups which can automatically be connected to the teats of an animal located at one side of the milking robot and, after this animal has been milked, to the teats of an animal located at the other side thereof.

17. A construction as claimed in any one of the preceding claims, characterized in that there is a meeting point (16) between the feed station (3) and the milking robot area (2).

18. A construction as claimed in any one of the preceding claims, characterized in that a group of animals, after having been milked and having been provided with fodder, proceed to the resting area (4- 11, 4' - 11') intended for them.

19. A construction as claimed in any one of the preceding claims, characterized in that the space (1) is in connection with a pasture (35 - 42) and the animals can reach the pasture via the path (43) along or through the resting areas (4' - 11').

20. A construction as claimed in claim 19, characterized in that the pasture (35 - 42) is subdivided into sections, the number of which approximately corresponds to the number of groups of animals.

21. A construction as claimed in any one of the preceding claims, characterized in that computer-controlled doors (13, 18, 19, 20, 21, 26) are arranged in the path (12), the meeting points (14 - 17) and the resting areas (4 - 11).

## Patentansprüche

1. Vorrichtung zum automatischen Melken von Tieren, wie z. B. Kühen, die einen umschlossenen Bereich mit einem Raum (1) und eine Anzahl von Weiden (35 bis 42) aufweist, in denen sich die Tiere frei bewegen können, wobei von den Weiden (35 bis 42) getrennte Gruppen von Tieren aufzunehmen sind,
dadurch gekennzeichnet, daß die Vorrichtung ferner einen Melkroboterbereich (2) mit einem Melkroboter und mindestens einen Gang (12, 43) aufweist, der zwischen dem Melkroboterbereich (2) und den Weiden (35 bis 42) angeordnet ist, und daß die Weiden (35 bis 42) und der Melkroboterbereich über Türen, insbesondere rechnergesteuerte Türen (13, 18 bis 21), mit dem Gang verbunden sind, wobei die Türen derart geöffnet werden, daß die Tiere von einer jeweiligen Weide über den Gang (12, 43) zu dem Melkroboterbereich (2) gehen können, um gemolken zu werden, und von dem Melkroboterbereich (2) über den Gang (12, 43) zu der jeweiligen Weide.

2. Vorrichtung nach Anspruch 1,
dadurch gekennzeichnet, daß sich der Gang (43) zu dem Melkroboterbereich (2) entlang dem Ende einer Anzahl von Weideabschnitten (35 bis 42) erstreckt.

3. Vorrichtung nach Anspruch 2,
dadurch gekennzeichnet, daß sich der Gang (43) quer zu den Weideabschnitten erstreckt.

4. Vorrichtung nach einem der vorhergehenden Ansprüche,
dadurch gekennzeichnet, daß der Raum (1) etwa in der Hälfte der Länge des Ganges (43) angeordnet ist.

5. Vorrichtung nach einem der vorhergehenden Ansprüche,
dadurch gekennzeichnet, daß der Gang (12) in dem Raum (1) die Verlängerung des Ganges (43) zu den Weideabschnitten (35 bis 42) ist.

6. Vorrichtung nach einem der vorhergehenden Ansprüche,
dadurch gekennzeichnet, daß acht Weideabschnitte (35 bis 42) vorhanden sind, wobei jeder Weideabschnitt für eine Gruppe von zehn Tieren bestimmt ist.

7. Vorrichtung nach einem der vorhergehenden Ansprüche,
dadurch gekennzeichnet, daß ein Weideabschnitt (35 bis 42) eine Größe von etwa fünf Hektar hat.

8. Vorrichtung nach einem der vorhergehenden Ansprüche,
dadurch gekennzeichnet, daß der Raum (1) ein Laufstall ist, in dem sich die Tiere frei bewegen können.

9. Vorrichtung nach einem der vorhergehenden Ansprüche,
dadurch gekennzeichnet, daß den Tieren nach jedem Durchlaufen des Melkroboterbereiches (2) und einer Fütterungsstation (3) eine Ruhezeit von etwa sechs Stunden zur Verfügung steht.

10. Vorrichtung nach einem der vorhergehenden Ansprüche,
dadurch gekennzeichnet, daß eine Fütterungszeit von etwa einer Stunde für die Tiere vorgesehen ist.

11. Vorrichtung nach einem der vorhergehenden Ansprüche,
dadurch gekennzeichnet, daß die Melkzeit eines Tieres etwa sechs Minuten beträgt.

12. Vorrichtung nach einem der vorhergehenden Ansprüche,
dadurch gekennzeichnet, daß der Raum (1) Platz für etwa achtzig Tiere bietet.

13. Vorrichtung nach einem der vorhergehenden Ansprüche,
dadurch gekennzeichnet, daß die Tiere dreimal pro Tag gemolken werden.

14. Vorrichtung nach einem der vorhergehenden Ansprüche,
dadurch gekennzeichnet, daß zwei Begegnungsbereiche (14, 15) vor dem Melkroboter angeordnet sind.

15. Vorrichtung nach einem der vorhergehenden Ansprüche,
dadurch gekennzeichnet, daß der Melkroboterbereich (2) zwei Abteile (31, 32) mit einem Melkroboter aufweist, wobei sich stets ein Tier in einem der Abteile (31, 32) aufhält.

16. Vorrichtung nach Anspruch 15,
dadurch gekennzeichnet, daß der für beide Abteile (31, 32) vorgesehene Melkroboter mit Zitzenbechern versehen ist, die automatisch an die Zitzen eines auf der einen Seite des Melkroboters stehenden Tieres und nach dem Melken dieses Tieres an die Zitzen eines auf der anderen Seite stehenden Tieres anschließbar sind.

17. Vorrichtung nach einem der vorhergehenden Ansprüche,
dadurch gekennzeichnet, daß zwischen der Fütterungsstation (3) und dem Melkroboterbereich (2) ein Begegnungsbereich (16) vorgesehen ist.

18. Vorrichtung nach einem der vorhergehenden Ansprüche,
dadurch gekennzeichnet, daß eine Gruppe von Tieren nach dem Melken und der Versorgung mit Futter zu dem für sie vorgesehenen Ruhebereich (4 bis 11, 4' bis 11') geht.

19. Vorrichtung nach einem der vorhergehenden Ansprüche,
dadurch gekennzeichnet, daß der Raum (1) mit einer Weide (35 bis 42) verbunden ist, und daß die Weide von den Tieren über den Gang (43) zu erreichen ist, der längs der Ruhebereiche (4' bis 11') oder durch diese hindurch verläuft.

20. Vorrichtung nach Anspruch 19,
dadurch gekennzeichnet, daß die Weide (35 bis 42) in Abschnitte unterteilt ist, deren Anzahl etwa der Anzahl der Gruppen von Tieren entspricht.

21. Vorrichtung nach einem der vorhergehenden Ansprüche,
dadurch gekennzeichnet, daß rechnergesteuerte Türen (13, 18, 19, 20, 21, 26) in dem Gang (12), den Begegnungsbereichen (14 bis 17) und den Ruhebereichen (4 bis 11) angeordnet sind.

## Revendications

1. Dispositif de traite automatique d'animaux, tels que des vaches, comprenant une zone clôturée avec un espace (1) et un certain nombre de pâtures (35 à 42) où les animaux peuvent circuler librement, lesdites pâtures (35 à 42) étant aménagées pour héberger des groupes séparés d'animaux,
**caractérisé** en ce que le dispositif comprend en outre une zone (2) de robot trayeur avec un robot trayeur et au moins un chemin (12, 43) disposé entre la zone (2) du robot trayeur et lesdites pâtures (35 à 42) et en ce que les pâtures (35 à 42) et la zone du robot trayeur sont, par des portes, plus spécifiquement, des portes commandées par ordinateur, mises en communication avec ledit chemin, tandis que les portes sont ouvertes de telle manière que les animaux puissent passer d'une pâture respective par ledit chemin (12, 43) à la zone (2) du robot trayeur dans le but d'être traits, et de la zone (2) du robot trayeur par ledit chemin (12, 43) à la pâture respective.

2. Dispositif selon la revendication 1, caractérisé en ce que le chemin (43) conduisant à la zone (2) du robot trayeur s'étend le long de l'extrémité d'un certain nombre de sections de pâtures (35 à 42).

3. Dispositif selon la revendication 2, caractérisé en ce que le chemin (43) s'étend transversalement aux sections de pâtures.

4. Dispositif selon l'une quelconque des revendications précédentes,caractérisé en ce que l'espace (1) est situé approximativement à la moitié de la longueur du chemin (43).

5. Dispositif selon l'une quelconque des revendications précédentes, caractérisé en ce que le chemin (12) dans l'espace (1) est dans le prolongement du chemin (43) allant aux sections de pâture (35 à 42).

6. Dispositif selon l'une quelconque des revendications précédentes, caractérisé en ce qu'il y a huit sections de pâture (35 à 42), chaque section de pâture étant destinée à un groupe de dix animaux.

7. Dispositif selon l'une quelconque des revendications précédentes, caractérisé en ce qu'une section de pâture (35 à 42) a une taille d'environ cinq hectares.

8. Dispositif selon l'une quelconque des revendications précédentes, caractérisé en ce que l'espace (1) est une étable de stabulation libre où les animaux peuvent circuler librement.

9. Dispositif selon l'une quelconque des revendications précédentes, caractérisé en ce que, chaque fois après être passés par la zone (2) du robot trayeur et par un poste d'alimentation (3), les animaux ont une période de repos d'environ six heures.

10. Dispositif selon l'une quelconque des revendications précédentes, caractérisé en ce que les animaux ont un temps d'environ une heure pour se nourrir.

11. Dispositif selon l'une quelconque des revendications précédentes, caractérisé en ce que le temps de traite d'un animal a une durée d'environ six minutes.

12. Dispositif selon l'une quelconque des revendications précédentes, caractérisé en ce que l'espace (1) procure de la place pour environ quatre-vingts animaux.

13. Dispositif selon l'une quelconque des revendications précédentes, caractérisé en ce que les animaux sont traits trois fois par jour.

14. Dispositif selon l'une quelconque des revendications précédentes, caractérisé en ce qu'il y a deux points de rencontre (14, 15) en avant du robot trayeur.

15. Dispositif selon l'une quelconque des revendications précédentes, caractérisé en ce que la zone (2) du robot trayeur comprend deux compartiments (31, 32) ayant un robot trayeur, un animal étant toujours présent dans un des compartiments (31, 32).

16. Dispositif selon la revendication 15, caractérisé en ce que le robot trayeur qui est destiné aux deux compartiments (31, 32) est équipé de godets de trayons qui peuvent être reliés automatiquement aux trayons d'un animal situé sur un côté du robot trayeur et, après que cet animal a été trait, aux trayons d'un animal situé sur l'autre côté du robot.

17. Dispositif selon l'une quelconque des revendications précédentes, caractérisé en ce qu'il y a un point de rencontre (16) entre le poste d'alimentation (3) et la zone (2) du robot trayeur.

18. Dispositif selon l'unequelconque des revendications précédentes, caractérisé en ce qu'un groupe d'animaux, après avoir été traits et avoir reçu du fourrage, se rend à la zone de repos (4 à 11, 4' à 11') qui leur est destinée.

19. Dispositif selon l'une quelconque des revendications précédentes, carctérisé en ce que l'espace (1) est en communication avec une pâture (35 à 42) et en ce que les animaux peuvent parvenir à la pâture par le chemin (43) longeant les zones de repos (4' à 11') ou les traversant.

20. Dispositif selon la revendication 19, caractérisé en ce que la pâture (35 à 42) est subdivisée en sections dont le nombre correspond approximativement au nombre de groupes d'animaux.

21. Dispositif selon l'une quelconque des revendications précédentes, caractérisé en ce que des portes (13, 18, 19, 20, 21, 26) commandées par ordinateur sont disposées sur le chemin (12), les points de rencontre (14 à 17) et les zones de repos (4 à 11).
